(19) **Europäisches Patentamt / European Patent Office / Office européen des brevets**

(11) **EP 2 465 757 B1**

(12) **EUROPEAN PATENT SPECIFICATION**

(45) Date of publication and mention of the grant of the patent:
**25.12.2013 Bulletin 2013/52**

(51) Int Cl.:
**B62D 55/14** *(2006.01)*

(21) Application number: **11191334.9**

(22) Date of filing: **30.11.2011**

(54) **Tracked system with variable geometry**

Raupenfahrzeug mit variabler Geometrie

Système de chenilles à géométrie variable

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2010 IT TO20100999**

(43) Date of publication of application:
**20.06.2012 Bulletin 2012/25**

(73) Proprietor: **Oto Melara S.p.A.**
**19136 La Spezia (IT)**

(72) Inventor: **La Spina, Giovanni**
**19124 La Spezia (IT)**

(74) Representative: **Di Gennaro, Sergio**
**Barzanò & Zanardo Milano S.p.A.**
**Corso Vittorio Emanuele II, 61**
**10128 Torino (IT)**

(56) References cited:
**DE-A1- 3 618 625    FR-A1- 2 850 350**
**JP-A- 61 001 581    JP-U- H0 288 875**
**US-A- 4 500 139**

## Description

The present invention is relative to a tracked system and, more in detail, to a tracked system with variable geometry.

It is known that tracked vehicles, in particular those of the military or agricultural type, are provided with a pair of independent tracks, which are respectively mounted on a left and on a right side of the vehicle itself.

It is also known that said tracks are controlled by motorized moving means, which are able to cause the vehicle to perform a rotation movement on a central point, which is also known as *pivot movement.*

The rotation movement of the vehicle on a central point, also known as *pivot or pivoting movement,* is particularly stressful for the part of track that is in contact with the ground or with the road surface, both from a mechanical and from an energetic point of view.

From a mechanical point of view, said movement is stressful due to the fact that it develops a sliding friction which is:

- oriented in a direction that is substantially orthogonal to the weight force; and
- distributed in a non uniform way on the part of track that is contact with the ground or with the road surface.

From an energetic point of view, the stress is caused by the above-mentioned friction, which generates a significant waste of power and torque in order to face the request for a rotation on a central point, in particular in case the vehicle is heavy or long with respect to its axle track (axle track meaning the distance between the respective centers of the two wheels of the same axle) and, therefore, in particular for big agricultural machines or military vehicles provided with heavy loads or heavy armor platings.

It's known, from patent application US4500139A, a support system able to permit selective alteration of the length of the ground-engaging portion of a crawler track; thus permitting maximum ground contact which is necessary for traction and support. Said support system also permits reduced track ground contact for improved mobility.

It's also known, from patent application JPH0288875U, a support system able to permit selective alteration of the length of the ground-engaging portion of a crawler track.

The drawbacks described above can be applied both to tracked vehicles provided with rubber tracks and to tracked vehicles provided with metal tracks.

Therefore, the object of the present invention is to describe a tracked system with variable geometry, which allows a reduction of the drawbacks described above.

According to the present invention, a tracked system with variable geometry is provided, which is of the type claimed in the first claim.

According to the present invention, furthermore, a tracked vehicle is provided, which comprises a tracked system with variable geometry and is of the type claimed in claim 9.

The invention will now be described with reference to the accompanying drawings, which illustrate a nonlimiting embodiment, wherein:

- figure 1 illustrates a tracked system with variable geometry in a first use configuration according to the present invention; and
- figure 2 illustrates a tracked system with variable geometry in a second use configuration according to the present invention.

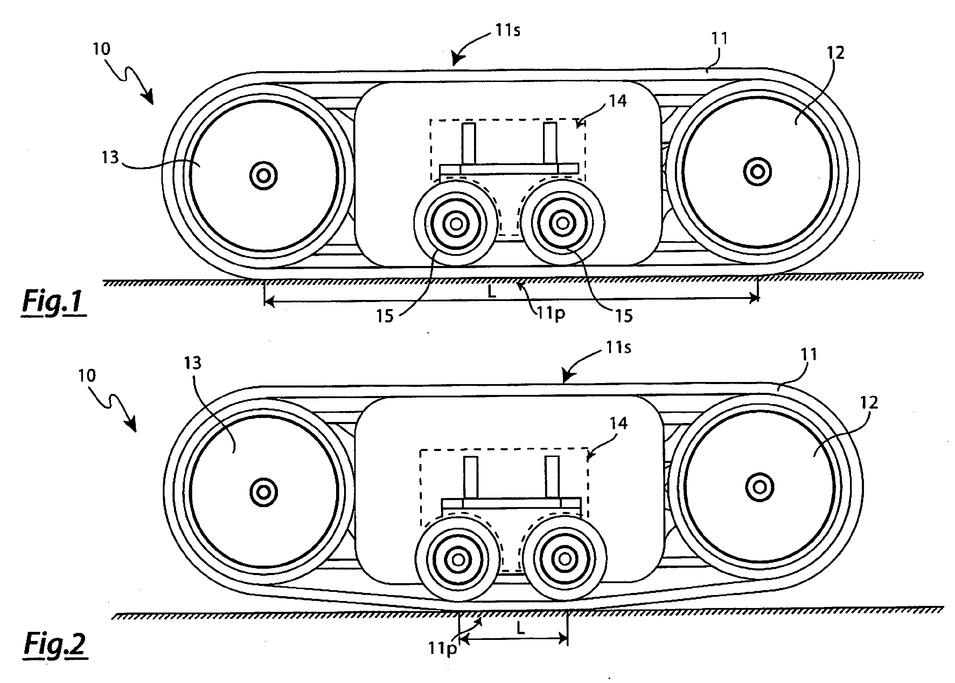

With reference to figure 1, number 10 indicates a tracked system with variable geometry as a whole, which comprises a track 11, which presents a first portion 11p having a respective first area that is in contact with the ground and a second portion 11s having a respective second area that is opposite to the previous first portion 11p, and which is tensioned by at least one driving wheel 12 and at least one driven wheel 13, which are both coupled to track 11.

In particular, driving wheel 12 is arranged in correspondence to an end of the track that is oriented towards the front or rear end of a vehicle provided with a pair of tracks 11, while driven wheel 13 is arranged in correspondence to a second end of the track that is oriented towards the opposite end of the vehicle itself.

Driving wheel 12 is coupled to track 11 so as to provide it with a driving force that is sufficient to move the vehicle and, therefore, to cause the track to rotate with respect to the ground.

Driving wheel 12, furthermore, has to be coupled to the track so as to be able to provide a driving force that is sufficient to cause the vehicle to rotate on a central point or to rotate on itself, said movement being known as *pivot* or *pivoting movement.*

Tracked system 10 comprises a plurality of actuator means 14, which allow a variation of the geometry of portion 11p in contact with the ground, so that the area in contact with the ground or the road surface can be reduced, passing from a first larger size to a second smaller size, when the pivot movement is carried out.

Actuator means 14 are installed on a side of the track, so that, when system 10 is mounted on the vehicle, said actuator means 14 are arranged inside the axle track of the vehicle itself.

Actuator means 14 preferably comprise, for example, a pair of thrust pistons having a first end that is rigidly connected to a rigid structure of the system, and a second mobile end that acts on the first portion 11p of track 11.

More in detail, the second mobile end acts on one or more thrust wheels 15, thus exerting on them a thrust force having a direction that is substantially orthogonal to the plane on which the first portion 11p of the track lies. In the accompanying figures, there are two thrust wheels 15 for each track 11, said thrust wheels 15 being arranged in a row along a direction of maximum extension of track 11 itself and rotating, furthermore, around parallel axes; due to the effect of the force exerted by the thrust pistons, thrust wheels 15 deform the first portion 11p substantially in correspondence to its central part, namely in a region that comprises the vertical projection of the center of gravity of the vehicle on the ground, thus reducing the area of the above-mentioned first portion that is in contact with the ground or the road surface.

In detail, in a first use configuration, or rest configuration, actuator means 14 are in a rest position and thrust wheels 15 do not intercept the first portion 11p of the track, which, therefore, lies on the ground with an area having a first value a1.

In a second use configuration, or intervention configuration, which can be freely selected by a user of the vehicle on which system 10 according to the present invention is installed or automatically activated in concurrence with the execution of the pivot movement, actuator means 14 shift from said rest position to an operating position, in which thrust wheels 15 act on part of the first portion 11p of track 11, thus modifying its shape - if the track is observed laterally - and bringing the area of portion 11p that is in contact with the ground or the road surface to a second value a2, which is lower than the previous value a1.

When system 10 is in the second use configuration, driving wheel 12 and driven wheel 13 are raised with respect to the ground or the road surface.

As a consequence, the whole weight of the vehicle is released on an area having a value a2 that is lower than value a1.

If one assumes to install a pair of systems 10 according to the present invention on a vehicle and to respectively position them on the left side and on the right side of the vehicle itself, and if one defines T [Nm] as the torque needed to cause said vehicle to perform a pivot movement, during which, as mentioned above, the vehicle is caused to rotate on a central point, one obtains:

$$T \alpha \frac{L}{C}$$

wherein L [m] corresponds to the length of portion 11p of the track that is in contact with the ground or with the road surface, while C [m] indicates the distance between two tracks 11 mounted on the vehicle, also known as axle track.

Now, considering that the axle track is defined in an unchangeable manner by a given type of vehicle, the element that can vary is length L.

As a consequence, when length L of the first portion 11p is reduced due to the configuration of system 10 in the second use configuration described above, the torque that has to be delivered to the tracks in order to allow the vehicle to rotate with a pivoting movement is reduced and, together with it, also the wear and the waste of energy to be used during the operation.

Obviously, the discussion concerning the variation of length L of the first portion 11p of track 11 that is in contact with the ground corresponds to a procedure for the variation of area A of portion 11p of track 11 that is in contact with the ground. Indeed, the width of track 11 is fixed and it cannot be changed; for this reason, considering that track 11 lies on the ground with its first portion 11p having an area that has a substantially rectangular shape, it is clear that a variation in length L leads to a variation in the area that is contact with the ground, thus reducing only two of the sides of the above-mentioned rectangle. The other two sides, instead, which are defined by the width of track 11, remain constant.

Furthermore, it should be pointed out that, using constructive techniques of the known type, the force that has to be exerted by actuator means 14 in order to reduce torque T necessary for the pivoting movement can simply be a fraction of the weight of the entire vehicle and, in case the vehicle is provided with a moving system of the hydraulic type, the necessary energy can be drawn from the existing hydraulic circuit.

The advantages of the tracked system with variable geometry according to the present invention are known in the light of the previous description. In particular, said system allows a rotation movement of a tracked vehicle on itself, assuring at the same time a reduced wear of the track, a lower energy waste, and a higher efficiency.

The more often the tracked vehicle is used in hostile or restricted environments, where it is necessary to perform repeated pivot movements, the more relevant is the advantage of performing said pivot movement in the most efficient way possible; similarly, the larger is the mass of the tracked vehicle, the more relevant is the advantage of performing the pivot movement in the most efficient way possible.

Finally, thrust wheels 15 can act on the track and modify its shape and, hence, the area and length L with which it lies on the ground, thus making them reach a plurality of different values, so as to adjust the reduction of the above-mentioned area and length to the value desired by the user.

The tracked system with variable geometry described above can be subject to variations, additions and changes that are obvious to a skilled person, without in this way going beyond the scope of protection provided by the accompanying claims.

## Claims

1. Tracked system (10) with a variable geometry, comprising:

- a wheel belt (11), comprising a portion (11p) having a respective first area (a1); said portion (11p) being in use in contact with the land or roadway, having a length (L);
- at least a traction wheel (12), coupled to said wheel belt (11) and susceptible of supplying a motive power of rotation of said wheel belt (11); and
- at least a driven gear (13), coupled to said wheel belt (11) ;

said tracked system (10) comprises actuator means (14) for a geometry variation of part of said wheel belt (11); said actuator means (14) comprising an intervention configuration wherein configure said portion (11p) of said wheel belt (11) upon at least a second area (a2) in use in contact with the land; said second area (a2) being different from said first area (a1);
said actuator means comprise a plurality of thrusting wheels (15) of said portion (11p) of said wheel belt (11); said plurality of thrusting wheels (15) being configurable upon a plurality of different positions;
in said intervention configuration said length (L) is reduced with respect to a rest configuration of said actuator means (14);
**characterized in that** in said rest configuration said thrusting wheels (15) do not encounter said portion (11p).

2. Tracked system according to claim 1, wherein in said intervention configuration said second area is smaller with respect to said first area.

3. Tracked system according to claim 1, wherein said second area is:

- in centered position with respect to a projection on the ground of the center of gravity of a vehicle upon which said system (10) is susceptible of being mounted; and
- enclosed within said first area.

4. Tracked system according to claim 1, wherein said actuator means (14) comprise a plurality of thrusting pistons, having a first end fixed to a rigid structure of said tracked system (10) and a second movable end acting on said portion (11p).

5. Tracked system according to claim 4 and claim 1, wherein said second movable end is connected to said thrusting wheels (15); said thrusting wheels (15) being configured for exerting a thrusting power upon said portion; said thrusting power being substantially orthogonal with respect to the land upon which - in use - said portion of said wheel belt rests.

6. Tracked system according to claim 1, wherein said plurality of thrusting wheels (15) comprises at least a pair of wheels parallely oriented and rowarranged along a direction of maximum extension of said wheel belt (11).

7. Tracked system according to any of the preceding claims, wherein said actuator means (14) are hydraulic pistons.

8. Tracked system according to any of the preceding claims, wherein in said intervention configuration there are said traction wheel (12) and said driven gear (13), in use at a respective height with respect to a flat land.

9. Tracked vehicle comprising a tracked system (10) according to any of the claims 1-8.

10. Tracked vehicle according to claim 9, comprising at least a wheel belt (11) upon a side respectively left and right.

**Patentansprüche**

1. Raupensystem (10) mit variabler Geometrie, umfassend:

- eine Gleiskette (11), die einen Teil (11 p) mit einer entsprechenden ersten Fläche (a1) umfasst; wobei die Fläche 5 (11p), die in der Verwendung in Kontakt mit dem Land oder der Straßenoberfläche ist, eine Länge (L) hat;
- mindestens ein Antriebsrad (12), das mit der Gleiskette (11) gekoppelt ist und dazu geeignet ist, an die Gleiskette eine Bewegungskraft zum Zirkulieren-Lassen der Gleiskette (11) anzulegen; und
- mindestens ein angetriebenes Rad (13), das mit der Gleiskette (11) gekoppelt ist;

wobei das Raupensystem (10) Aktormittel (14) für eine Geometrievariation eines Teils der Gleiskette (11) umfasst; wobei die Aktormittel (14) eine Interventionskonfiguration, zum Konfigurieren des Teils (11 b) der Gleiskette (11) auf zumindest eine zweite Fläche (a2) umfassen, die in der Verwendung mit dem Land in Kontakt ist; wobei sich die zweite Fläche (a2) von der ersten Fläche (a1) unterscheidet;
wobei die Aktormittel eine Mehrzahl von Druckrädern (15) des Teils (11 p) der Gleiskette (11) umfassen;
wobei die Mehrzahl von Druckrädern (15) auf eine Mehrzahl unterschiedlicher Positionen konfigurierbar ist;
in der Interventionskonfiguration die Länge (L) im Vergleich zu einer Ruhekonfiguration der Aktormittel (14) verringert wird;
**dadurch gekennzeichnet, dass** in der Ruhekonfiguration die Druckräder (15) nicht auf den Teil (11p) treffen.

2. Raupensystem gemäß Anspruch 1, wobei in der Interventionskonfiguration die zweite Fläche im Vergleich zur ersten Fläche kleiner ist.

3. Raupensystem gemäß Anspruch 1, wobei die zweite Fläche:

   - bezüglich einer Projektion des Schwerpunkts eines Fahrzeugs, an dem das System (10) geeigneterweise angebracht werden kann, auf den Boden in einer mittigen Position ist; und
   - in der ersten Fläche eingeschlossen ist.

4. Raupensystem gemäß Anspruch 1, wobei die Aktormittel (14) eine Mehrzahl von Druckkolben umfassen, deren erstes Ende an einer steifen Struktur des Raupensystems (10) befestigt ist und deren zweites bewegliches Ende auf den Teil (11 p) wirkt.

5. Raupensystem gemäß Anspruch 4 und Anspruch 1, wobei das zweite bewegliche Ende mit den Druckrädern (15) verbunden ist; wobei die Druckräder (15) dazu konfiguriert sind, auf den Teil eine Druckkraft auszüüben; wobei die Druckkraft im Wesentlichen senkrecht zu dem Land wirkt, auf dem der Teil der Gleiskette in der Verwendung ruht.

6. Raupensystem gemäß Anspruch 1, wobei die Mehrzahl von Druckrädern (15) mindestens ein Paar Räder umfasst, die parallel und in einer Reihe entlang einer Richtung der maximalen Ausdehnung der Gleiskette (11) angeordnet sind.

7. Raupensystem gemäß einem der vorhergehenden Ansprüche, wobei die Aktormittel (14) Hydraulikkolben sind.

8. Raupensystem gemäß einem der vorhergehenden Ansprüche, wobei in der Interventionskonfiguration das Antriebsrad (12) und das angetriebene Rad (13) in der Verwendung auf einer entsprechenden Höhe bezüglich dem flachen Land sind.

9. Raupenfahrzeug, das ein Raupensystem (10) gemäß einem der Ansprüche 1 bis 8 umfasst.

10. Raupenfahrzeug gemäß Anspruch 9, umfassend mindestens eine Gleiskette (11) jeweils auf der linken bzw. der rechten Seite.

**Revendications**

1. Système à chenille (10) avec une géométrie variable, comprenant :

   - une chenille à roues (11), comprenant une partie (11p) comportant une première zone respective (a1) ; ladite partie 5 (11p) étant, durant l'utilisation, en contact avec le sol ou la chaussée, possédant une longueur (L) ;
   - au moins une roue motrice (12), accouplée avec ladite chenille à roues (11) et susceptible de fournir une puissance motrice de rotation de ladite chenille à roues (11) ; et
   - au moins une roue menée (13), accouplée avec ladite chenille à roues (11) ;

   ledit système à chenille (10) comprend des moyens actionneurs (14) pour une variation de géométrie d'une partie de ladite chenille à roues (11) ; lesdits moyens actionneurs (14) comprenant une configuration d'intervention qui configure ladite partie (11p) de ladite chenille à roues (11) sur au moins une seconde zone (a2) durant l'utilisation en contact avec le sol ; ladite seconde zone (a2) étant différente de ladite première zone (a1) ;
   lesdits moyens actionneurs comprennent une pluralité de roues de poussée (15) de ladite partie (11p) de ladite chenille à roues (11) ; ladite pluralité de roues de poussée (15) étant configurables sur une pluralité de positions différentes ;
   dans ladite configuration d'intervention, ladite longueur (L) est réduite par rapport à une configuration de repos desdits moyens actionneurs (14) ;
   **caractérisé en ce que**, dans ladite configuration de repos, lesdites roues de poussée (15) ne rencontrent pas ladite partie (11p).

2. Système à chenille selon la revendication 1, dans lequel, dans ladite configuration d'intervention, ladite seconde zone est plus petite par rapport à ladite première zone.

3. Système à chenille selon la revendication 1, dans lequel ladite seconde zone est :

   - dans une position centrée par rapport à une projection sur le sol du centre de gravité d'un véhicule sur lequel ledit système (10) est susceptible d'être monté ; et
   - enfermé à l'intérieur de ladite première zone.

4. Système à chenille selon la revendication 1, dans lequel lesdits moyens actionneurs (14) comprennent une pluralité de pistons de poussée, comportant une première extrémité fixée à une structure rigide dudit système à chenille (10) et une seconde extrémité mobile agissant sur ladite partie (11p).

**5.** Système à chenille selon la revendication 4 et la revendication 1,
dans lequel ladite seconde extrémité mobile est raccordée auxdites roues de poussée (15) ; lesdites roues de poussée (15) étant configurées pour exercer une puissance de poussée sur ladite partie; ladite puissance de poussée étant sensiblement orthogonale par rapport au sol sur lequel- durant l'utilisation - ladite partie de ladite chenille à roues repose.

**6.** Système à chenille selon la revendication 1, dans lequel ladite pluralité de roues de poussée (15) comprend au moins une paire de roues orientées parallèlement et agencées en rangéele long d'une direction d'extension maximum de ladite chenille à roues (11).

**7.** Système à chenille selon une quelconque des revendications précédentes, dans lequel lesdits moyens actionneurs (14) sont des pistons hydrauliques.

**8.** Système à chenille selon une quelconque des revendications précédentes, dans lequel, dans ladite configuration d'intervention, il y a ladite roue motrice (12) et ladite roue menée (13), durant l'utilisation, à une hauteur respectivepar rapport à un sol plat.

**9.** Véhicule à chenilles comprenant un système à chenille (10) selon une quelconque des revendications 1 à 8.

**10.** Véhicule à chenilles selon la revendication 9, comprenant au moins une chenille à roues (11) sur un côté respectivementgauche et droit.

Fig.1

Fig.2

**EP 2 465 757 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4500139 A